# EUROPÄISCHE PATENTANMELDUNG

(11) **EP 4 439 218 A1**
(43) Veröffentlichungstag der Anmeldung: **02.10.2024**
(21) Anmeldenummer: 24161142.5
(22) Anmeldetag: 04.03.2024
(51) Int. Cl.: G05D 1/00

(54) **FAHRERLOSES TRANSPORTFAHRZEUG**

(30) Priorität: 27.03.2023 DE 102023107599
(71) Anmelder: SICK AG, 79183 Waldkirch (DE)
(72) Erfinder: Böhler, Frank, 79206 Breisach-Gündlingen (DE)
(74) Vertreter: Manitz Finsterwald Patent- und Rechtsanwaltspartnerschaft mbB

(57) **Zusammenfassung**

Die vorliegende Erfindung betrifft ein fahrerloses Transportfahrzeug zum Transportieren und Absetzen einer Last, mit einem primären Umgebungssensor und zumindest einem sekundären Umgebungssensor, wobei das Transportfahrzeug ausgebildet ist, zunächst mit dem primären Umgebungssensor einen Absetzort für die Last sowie den Bereich zwischen dem Absetzort und dem Flurförderzeug zu erfassen und auf Hindernisse zu überprüfen, wenn kein Hindernis erkannt wird, zu dem Absetzort zu fahren, während der Fahrt zum Absetzort mit dem sekundären Umgebungssensor die Fahrstrecke und den Absetzort auf Hindernisse zu überprüfen.

## Beschreibung

Die vorliegende Erfindung betrifft ein fahrerloses Transportfahrzeug zum Transportieren und Absetzen einer Last.

Solche Transportfahrzeuge werden z.B. in industriellen Prozessen verwendet, um Lasten automatisiert zu transportieren. Insbesondere wird bei solchen Transportfahrzeugen auch von Automated Guided Vehicles gesprochen (AGVs).

Die Beladung z.B. von Lkw erfolgt häufig mittels Paletten, auf welchen sich die zu transportierenden Waren befinden, wobei die Paletten möglichst platzsparend nebeneinander in einen Lkw oder einer Wechselbrücke angeordnet werden sollen.

Bisher werden solche fahrerlosen Transportfahrzeuge aber noch nicht vollautomatisiert eingesetzt, um Lkw, Lkw-Anhänger oder Wechselbrücken zu beladen. Eine solche Beladung wird häufig noch manuell vorgenommen.

Insbesondere muss bei einer automatischen Beladung, z.B. einer Wechselbrücke, sichergestellt sein, dass keine Beschädigungen an der Wechselbrücke oder an anderen Lasten auftreten und dass gegebenenfalls sich in der Nähe befindliche Personen nicht gefährdet werden.

Es ist daher die der Erfindung zugrundeliegende Aufgabe, ein Transportfahrzeug anzugeben, welches ein automatisiertes Beladen von Lkws oder Wechselbrücken ermöglicht.

Diese Aufgabe wird durch ein Transportfahrzeug gemäß Anspruch 1 gelöst.

Das erfindungsgemäße fahrerlose Transportfahrzeug umfasst einen primären Umgebungssensor und zumindest einen sekundären Umgebungssensor. Das Transportfahrzeug ist ausgebildet,
- zunächst mit dem primären Umgebungssensor einen Absetzort für die Last sowie den Bereich zwischen dem Absetzort und dem Transportfahrzeug zu erfassen, d.h. insbesondere abzutasten und auf Hindernisse zu überprüfen,
- wenn kein Hindernis erkannt wird, zu dem Absetzort zu fahren,
- während der Fahrt zum Absetzort mit dem sekundären Umgebungssensor, bevorzugt die Fahrstrecke, und den Absetzort auf Hindernisse zu überprüfen.

Die Erfindung beruht auf der Erkenntnis, dass durch die doppelte Abtastung von Fahrstrecke zum Absetzort und Absetzort mit zwei verschiedenen Umgebungssensoren eine sehr hohe Sicherheit erzielt werden kann, d.h. ein sicherer Betrieb ermöglicht wird. Aufgrund dieser hohen Sicherheit kann ein automatisiertes Beladen z.B. einer Wechselbrücke erfolgen, da ausgeschlossen werden kann, dass beispielsweise eine Person sich am Absetzort befindet und dann durch das Einfahren des Transportfahrzeugs mit der Last verletzt oder eingequetscht wird.

Genauer gesagt kann das Transportfahrzeug mit einer Last beladen sein, beispielsweise einer Palette. Das Transportfahrzeug tastet dann zunächst mit dem primären Umgebungssensor den Absetzort für die Last sowie den Bereich zwischen dem Absetzort und dem Transportfahrzeug ab, um möglicherweise vorhandene Hindernisse (z.B. Personen oder Gegenstände) zu erkennen. Durch diese Abtastung mittels des primären Umgebungssensors ist bereits eine sehr hohe Sicherheit vorhanden, dass sich z.B. keine Personen in gefährdeten Bereichen aufhalten. Wird nun erkannt, dass kein Hindernis vorhanden ist, beginnt das Transportfahrzeug zum Absetzort zu fahren. Während der Fahrt zum Absetzort wird der sekundäre Umgebungssensor aktiviert und überprüft, beispielsweise wiederholt und/oder periodisch, die Fahrstrecke zum Absetzort und letztlich auch den Absetzort auf Hindernisse, d.h. wiederum auf Personen oder unerwünschte Gegenstände. Selbst wenn also eine Person durch die Erfassung mit dem primären Umgebungssensor nicht erkannt worden wäre oder sich zum Zeitpunkt der Erfassung noch nicht am Absetzort oder auf der Fahrstrecke dorthin befunden hätte, so könnte diese Person noch mit dem sekundären Umgebungssensor erkannt werden. Wird aber vom primären und/oder sekundären Umgebungssensor ein Hindernis erkannt, so kann eine Reaktion eingeleitet werden, die beispielsweise das Stoppen des Transportfahrzeugs, das Verlangsamen des Transportfahrzeugs oder das Umfahren des Hindernisses umfasst.

Wird hingegen kein Hindernis festgestellt, so kann das Transportfahrzeug den Weg bis zum Absetzort unter Überprüfung durch den sekundären Umgebungssensor fortsetzen und letztlich die Last am Absetzort abladen.

Bei dem primären Umgebungssensor und dem sekundären Umgebungssensor handelt es sich insbesondere um voneinander getrennte Sensoren, welche bevorzugt auch unterschiedliche Arten von Sensoren sind. Die Sensoren können somit z.B. auf unterschiedlichen Messprinzipien beruhen.

Der primäre Umgebungssensor und der sekundäre Umgebungssensor können etwa in dieselbe Richtung ausgerichtet sein, so dass sie sich zumindest bereichsweise überlappende Sichtbereiche bzw. Messbereiche umfassen. Die Ausrichtung der Umgebungssensoren kann beispielsweise nach hinten bezüglich des Transportfahrzeugs sein, so dass beispielsweise der primäre Umgebungssensor unter der, insbesondere angehobenen, Last hindurchblicken kann. Der sekundäre Umgebungssensor kann bevorzugt an einem hinteren Ende des Transportfahrzeugs angebracht sein, beispielsweise an den Enden einer Gabelzinke, falls es sich bei dem Transportfahrzeug um einen Gabelstapler handelt. Durch die Anbringung am hinteren Ende kann der sekundäre Umgebungssensor auch bei abgesenkter Last die Fahrstrecke und/oder den Absetzort erfassen.

Der Absetzort kann insbesondere der Raum- und/oder Flächenbereich sein, an welchem sich die Last nach dem Absetzen durch das Transportfahrzeug befinden soll. Der Absetzort kann demensprechend z.B. die Form und/oder Größe einer von dem Transportfahrzeug transportierten Palette besitzen.

Das Transportfahrzeug kann insbesondere eine Steuereinheit umfassen, die die hierin erwähnte Aktionen des Transportfahrzeugs steuert und welche auch die von den Umgebungssensoren gelieferten Messdaten auswertet. Die Steuereinheit kann insbesondere über Funk, beispielsweise WLAN, mit einem übergeordneten Automatisierungssystem gekoppelt sein. Das übergeordnete Automatisierungssystem kann dem Transportfahrzeug insbesondere mitteilen, wo sich der Absetzort für eine Last befindet, wie später noch genauer ausgeführt.

Vorteilhafte Weiterbildungen der Erfindung sind der Beschreibung, den Zeichnungen sowie den Unteransprüchen zu entnehmen.

Gemäß einer ersten Ausführungsform ist das Transportfahrzeug ausgebildet, mit dem primären Umgebungssensor zusätzlich zu dem Absetzort auch Nachbarbereiche des Absetzorts zu erfassen und die erfassten Nachbarbereiche mit erwarteten Nachbarbereichen zu vergleichen. Insbesondere kann der primäre Umgebungssensor (aber auch der sekundäre Umgebungssensor) jeweils zweidimensionale Konturen des Absetzorts und der Nachbarbereiche erfassen. Die erwarteten Nachbarbereiche können ebenfalls zweidimensionale Konturen umfassen, welche insbesondere die Begrenzung des Absetzorts (z.B. in einer Draufsicht) zeigen. Die Nachbarbereiche können also insbesondere die Begrenzung des Absetzorts darstellen.

Die Erfassung mittels des primären Umgebungssensors erfolgt beispielsweise beim Stillstand des Transportfahrzeugs, wobei die Erfassung auch z.B. bei Langsamfahrt möglich ist. Falls zukünftig schnellere Sensoren zur Verfügung stehen, könnte auch eine Erfassung bei Normalgeschwindigkeit ermöglicht werden.

Gemäß einer weiteren Ausführungsform ist das Transportfahrzeug ausgebildet, die erwarteten Nachbarbereiche von einem übergeordneten Automatisierungssystem zu empfangen.

Gemäß einer weiteren Ausführungsform ist das Transportfahrzeug ausgebildet, bei der Prüfung auf Hindernisse mittels des primären Umgebungssensors eine Plausibilitätsprüfung der von dem primären Umgebungssensor erfassten Messdaten durchzuführen. Die Plausibilitätsprüfung dient dazu, gegebenenfalls vorhandene Hindernisse besser zu erkennen und kann sich insbesondere auf die erwarteten Nachbarbereiche stützen.

Gemäß einer weiteren Ausführungsform ist das Transportfahrzeug ausgebildet, bei der Plausibilitätsprüfung einen Toleranzbereich um die erwarteten Nachbarbereiche zu legen, wobei Messpunkte außerhalb des Toleranzbereichs, welche vor oder hinter den erwarteten Nachbarbereichen liegen, und/oder fehlende Messpunkte als Hindernis gewertet werden.

Durch die erwarteten Nachbarbereiche ist dem Transportfahrzeug bekannt, wo beispielsweise eine hintere Begrenzung des Absetzorts liegen müsste. Werden mittels eines Umgebungssensors nun Messpunkte erfasst, welche vor der erwarteten hinteren Begrenzung (und auch außerhalb des Toleranzbereichs) liegen, so lässt dies darauf schließen, dass sich hier z.B. eine Person befindet.

Selbiges kann der Fall sein, wenn sich Messpunkte außerhalb des Toleranzbereichs und hinter dem erwarteten Nachbarbereich befinden. Wird beispielsweise davon ausgegangen, dass die hintere Begrenzung des Absetzorts durch eine Wand oder eine andere Palette gebildet ist, so dürften keine Messpunkte hinter dem erwarteten Nachbarbereich liegen. In der Praxis kann es aber vorkommen, dass z.B. schwarze Hosenbeine sehr viel Signal "schlucken", so dass der Umgebungssensor fälschlicherweise meldet, dass sich ein Messpunkt hinter den erwarteten Nachbarbereichen befindet. Dies ist dann wiederum ein Hinweis auf ein Hindernis sein, so dass das Transportfahrzeug dann Gegenmaßnahmen ergreifen muss und beispielsweise stoppt.

Ebenfalls können fehlende Messpunkte darauf hindeuten, dass z.B. durch schwarze Hosenbeine oder dergleichen keine Messung möglich war, obwohl aufgrund der bekannten erwarteten Nachbarbereiche davon auszugehen ist, dass ein Messpunkt vorhanden sein sollte.

Der Toleranzbereich kann sich insbesondere beidseitig um eine Kontur des erwarteten Nachbarbereichs erstrecken und insbesondere eine vorbestimmte Größe bzw. Breite aufweisen. Beispielsweise kann der Toleranzbereich jeweils 15 cm, 20 cm oder 30 cm beidseits entfernt des erwarteten Nachbarbereichs enden.

Gemäß einer weiteren Ausführungsform ist das Transportfahrzeug ausgebildet, die erfassten Nachbarbereiche und die erwarteten Nachbarbereiche, insbesondere durch Rotation und Verschiebung, aneinander anzupassen. Die Anpassung kann durch das Fahrzeug selbst erfolgen, also beispielsweise durch eine Steuereinheit des Transportfahrzeugs. Alternativ kann die Anpassung auch durch eine externe Einheit erfolgen, wobei das Transportfahrzeug dann das Ergebnis empfangen kann. Durch die Anpassung kann das Transportfahrzeug z.B. eine schräg stehende Wechselbrücke erkennen, welche nicht ganz gerade z.B. an ein Verladeterminal herangefahren wurde.

Gemäß einer weiteren Ausführungsform ist das Transportfahrzeug ausgebildet, die Länge des Fahrwegs bis zum Absetzort zu ermitteln und während der Fahrt zum Absetzort den tatsächlich zurückgelegten Fahrweg mittels einer, insbesondere mit einem Rad oder einer Achse des Transportfahrzeugs gekoppelten, Fahrsensorik zu überwachen. Die Fahrsensorik kann z.B. über die Anzahl der Radumdrehungen eine zurückgelegte Fahrstrecke bestimmen. Die Überwachung mittels der Fahrsensorik kann bevorzugt sicherheitsgerichtet sein, d.h. z.B. ein Sicherheitslevel wie SIL2, SIL3 oder SIL4 erfüllen (SIL für Security Integrity Level).

Wird durch die Fahrsensorik erkannt, dass das Transportfahrzeug mehr als die ermittelte Länge des Fahrwegs zurückgelegt hat, kann wiederum eine Gegenmaßnahme ergriffen werden, beispielsweise ein Stoppen des Fahrzeugs oder ein Umkehren der Fahrtrichtung.

Die Überwachung des Fahrwegs mittels der Fahrsensorik dient der Schaffung einer zusätzlichen Sicherheit, so dass das Transportfahrzeug nicht über den Absetzort hinausfährt, da Hindernisse außerhalb des Absetzorts bzw. hinterhalb des Absetzorts möglicherweise nicht erfasst wurden. Auch wird damit verhindert, dass beim Hinausfahren über den Absetzort benachbarte Gegenstände oder Begrenzungen beschädigt werden.

Gemäß einer weiteren Ausführungsform ist das Transportfahrzeug ausgebildet, beim Anfahren des Absetzorts den primären Umgebungssensor unberücksichtigt zu lassen. Dies bedeutet, dass der primäre Umgebungssensor "gemutet" wird, nachdem das Anfahren des Absetzorts begonnen hat. Durch das "Muten" wird der primäre Umgebungssensor also beispielsweise ausgeschaltet oder die Messwerte des primären Umgebungssensors werden zumindest nicht berücksichtigt und/oder weiterverarbeitet.

Üblicherweise muss die Last beim Einfahren in einen Lkw oder eine Wechselbrücke abgesenkt werden, wodurch häufig der primäre Umgebungssensor von der Last abgedeckt wird, so dass die Funktion des primären Umgebungssensors eingeschränkt ist. Das "Muten" kann dementsprechend auch verhindern, dass die abgesenkte Last als Hindernis erkannt wird. Beim Anfahren des Absetzorts wird aber, wie oben ausgeführt, dann der sekundäre Umgebungssensor aktiviert und ausgewertet, um den durch die Last blockierten primären Umgebungssensor in dieser Hinsicht zu ersetzen und zu überprüfen.

Gemäß einer weiteren Ausführungsform ist das Transportfahrzeug ausgebildet, beim Anfahren des Abstellorts auch den sekundären Umgebungssensor unberücksichtigt zu lassen, wenn das Transportfahrzeug den erfassten und/oder den erwarteten Nachbarbereichen näher als einen vorbestimmten Schwellenwert kommt. Nähert sich das Transportfahrzeug also den erfassten und/oder erwarteten Nachbarbereichen an, so werden durch den sekundären Umgebungssensor dann Messwerte von diesen Nachbarbereichen erfasst, die beispielsweise in einem Schutzfeld des sekundären Umgebungssensors liegen können. Wenn der sekundäre Umgebungssensor in seinem Schutzfeld einen Messwert bzw. ein Hindernis erkennt, kann dies zum Stopp des Transportfahrzeugs führen, was unerwünscht ist, da dann die Last nicht vollständig bis zum Absetzort transportiert werden könnte. Aus diesem Grund wird auch der sekundäre Umgebungssensor "gemutet", wenn das Transportfahrzeug den Nachbarbereichen (also beispielsweise einer benachbarten Palette) so nahe kommt, dass z.B. eine benachbarte Palette eine Schutzfeldverletzung bewirken würde. Der vorbestimmte Schwellenwert kann dementsprechend der Größe des Schutzfelds des sekundären Umgebungssensors entsprechen. Alternativ kann der vorbestimmte Schwellenwert auch der Größe des Detektionsbereichs des sekundären Umgebungssensors entsprechen.

Der sekundäre Umgebungssensor wird bevorzugt also erst dann "gemutet", wenn sich die Last schon fast vollständig am Absetzort befindet und der sekundäre Umgebungssensor den verbleibenden Bereich des Absetzorts bereits erfasst hat und dementsprechend sichergestellt hat, dass dort keine Hindernisse (also Personen oder Gegenstände) vorhanden sind.

Gemäß einer weiteren Ausführungsform ist das Transportfahrzeug ausgebildet, den restlichen Fahrweg, insbesondere allein, durch die Fahrsensorik zu überwachen, nachdem der sekundäre Umgebungssensor unberücksichtigt gelassen wurde. Der relativ geringe verbleibende Verfahrweg kann also allein über die Fahrsensorik überwacht werden, wobei die Last nach Erreichen des Absetzorts dann am Absetzort abgestellt wird. Das Abstellen kann beispielsweise durch ein Herunterlassen der Gabelzinke eines Gabelstaplers erfolgen.

Gemäß einer weiteren Ausführungsform umfasst der primäre und/oder der sekundäre Umgebungssensor einen 2D- oder 3D-Sensor, einen Laserscanner, einen Mehrlagen-Laserscanner, einen Mehrstrahlscanner, eine 3D-Kamera, ein Radar und/oder einen Ultraschallsensor. Der primäre Umgebungssensor ist bevorzugt als Laserscanner und der sekundäre Umgebungssensor bevorzugt als Ultraschallsensor ausgebildet. Auf diese Weise können unterschiedliche Messprinzipien verwendet werden, um den Fahrweg und den Absetzort abzusichern.

Beispielsweise kann der primäre Umgebungssensor auf einer Höhe von etwa 200 mm über dem Boden angebracht sein und eine einzige Scanebene parallel zum Boden aufweisen. Der sekundäre Umgebungssensor umfasst bevorzugt zwei Einzelsensoren, die jeweils Ultraschallsensoren sind. Sowohl der primäre Umgebungssensor als auch der sekundäre Umgebungssensor können nach rückwärtig ausgerichtet sein, wobei beispielsweise die beiden Ultraschallsensoren an den Enden einer Gabelzinke des Transportfahrzeugs angebracht sein können.

Gemäß einer weiteren Ausführungsform ist das Transportfahrzeug ein autonomer Gabelstapler oder ein autonomes Flurförderzeug.

Weiterer Gegenstand der Erfindung ist ein Verfahren zum Absetzen einer Last an einem Absetzort mittels eines Transportfahrzeugs, bei welchem
- zunächst mit einem primären Umgebungssensor ein Absetzort für die Last sowie der Bereich zwischen dem Absetzort und dem Transportfahrzeug erfasst und auf Hindernisse überprüft wird,
- wenn kein Hindernis erkannt wird, das Transportfahrzeug zu dem Absetzort fährt,
- während der Fahrt zum Absetzort mit einem sekundären Umgebungssensor die Fahrstrecke und der Absetzort auf Hindernisse überprüft werden.

Gemäß einer Weiterbildung des Verfahrens befindet sich der Absetzort in einem Lkw oder einer Wechselbrücke und fährt das Transportfahrzeug vor dem Erfassen des Absetzorts mit dem primären Umgebungssensor an eine Position außerhalb des Lkws oder der Wechselbrücke, von welcher aus der Absetzort mit dem primären Umgebungssensor erfassbar ist. Dies bedeutet, das Transportfahrzeug bleibt zunächst außerhalb des Lkws bzw. der Wechselbrücke, um von außerhalb die Erfassung mit dem primären Umgebungssensor durchzuführen und den Fahrweg sowie den Absetzort zu bestimmen.

Eine Wechselbrücke kann auch als Wechselbehälter, Wechselaufbau, Wechselpritsche, Wechselaufbaubrücke, Wechselkoffer oder auch Wechselladebehälter bezeichnet werden und ist ein austauschbarer Ladungsträger, der z. B. von einem Trägerfahrzeug unterfahren werden kann und sich von dem Trägerfahrzeug wieder trennen lässt.

Gemäß einer Weiterbildung wird zum Erfassen des Absetzorts mittels des primären Umgebungssensors die Last angehoben, um eine Sicht des primären Umgebungssensors unter der Last hindurch auf den Absetzort freizugeben. Ein solches Anheben ist insbesondere nur außerhalb des Lkws bzw. der Wechselbrücke möglich. Nach dem Senken der Last ist der primäre Umgebungssensor dann möglicherweise verdeckt, so dass beim Einfahren in den Lkw bzw. die Wechselbrücke der sekundäre Umgebungssensor die Überwachung des Fahrwegs und des Absetzorts übernimmt.

Sämtliche hierin genannten Verfahrensschritte und Aktionen des Transportfahrzeugs können insbesondere automatisch erfolgen, d.h. ohne menschliches Zutun oder menschliche Hilfe. Insbesondere kann das Transportfahrzeug den Absetzort per Funk empfangen, dann automatisch zur Wechselbrücke fahren, in welcher sich der Absetzort befindet. Schließlich wird gemäß der beschriebenen Art und Weise mit dem primären Umgebungssensor eine Überprüfung auf Hindernisse durchgeführt. Während des Anfahrens des Absetzorts erfolgt dann ein Überprüfen mittels des sekundären Umgebungssensors, was ebenfalls wiederum automatisch erfolgt. Schließlich wird am Absetzort der sekundäre Umgebungssensor gemutet und das übrige Positionieren der Last am Absetzort erfolgt automatisch mit den Fahrsensoren.

Die zu dem erfindungsgemäßen Transportfahrzeug getroffenen Aussagen gelten für das erfindungsgemäße Verfahren entsprechend. Dies gilt insbesondere hinsichtlich Vorteilen und bevorzugten Ausführungsformen. Ebenfalls gelten die Weiterbildungen des Verfahrens auch für das Transportfahrzeug. Es versteht sich überdies, dass sämtliche hierin genannten Merkmale miteinander kombinierbar sind, sofern nicht explizit Gegenteiliges angegeben ist.

Nachfolgend wird die Erfindung rein beispielhaft unter Bezugnahme auf die Zeichnungen beschrieben. Es zeigen:
- Fig. 1: schematisch in einer Seitenansicht ein Transportfahrzeug, welches sich einer Wechselbrücke annähert;
- Fig. 2: das Transportfahrzeug und die Wechselbrücke in schematischer Draufsicht;
- Fig. 3: ein Erfassen der Wechselbrücke mittels des primären Umgebungssensors;
- Fig. 4A und 4B: ein Anpassen der erfassten Messwerte;
- Fig. 5: ein Überprüfen auf Hindernisse;
- Fig. 6: das Erfassen eines Hindernisses gemäß einer ersten Möglichkeit;
- Fig. 7: das Erfassen eines Hindernisses gemäß einer zweiten Möglichkeit;

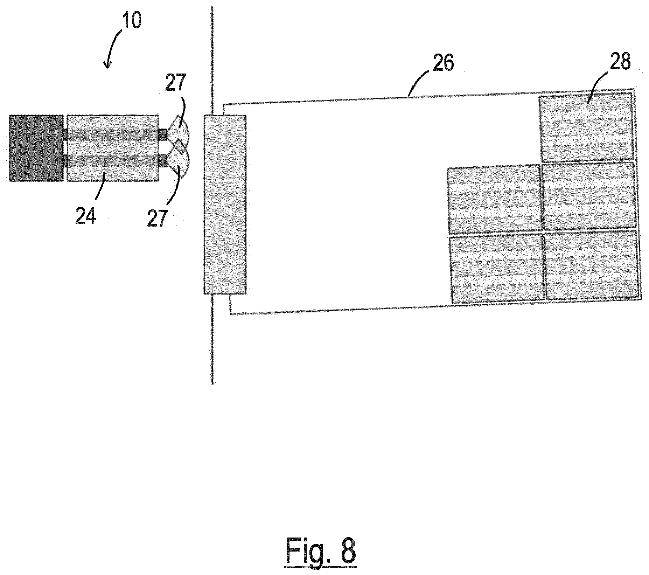

- Fig. 8: den Beginn des Einfahrens des Transportfahrzeugs in die Wechselbrücke;

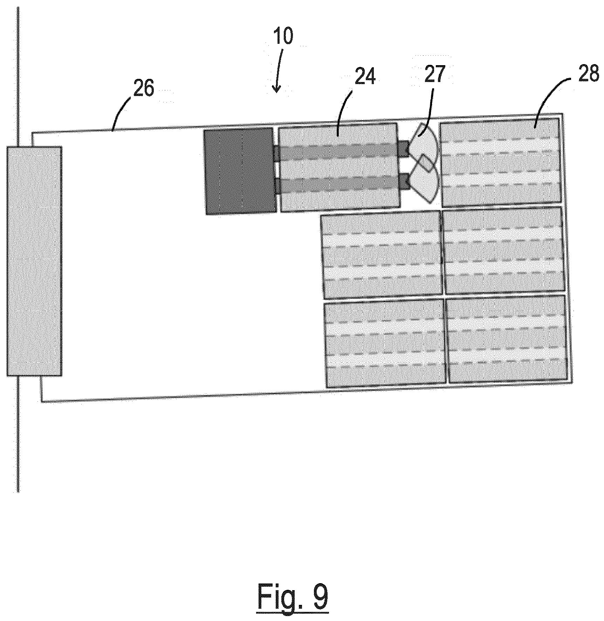

- Fig. 9: den Beginn des Anfahrens des Absetzorts durch das Transportfahrzeug;
- Fig. 10: das Abschalten des sekundären Umgebungssensors; und
- Fig. 11: das Positionieren der Last am Absetzort.

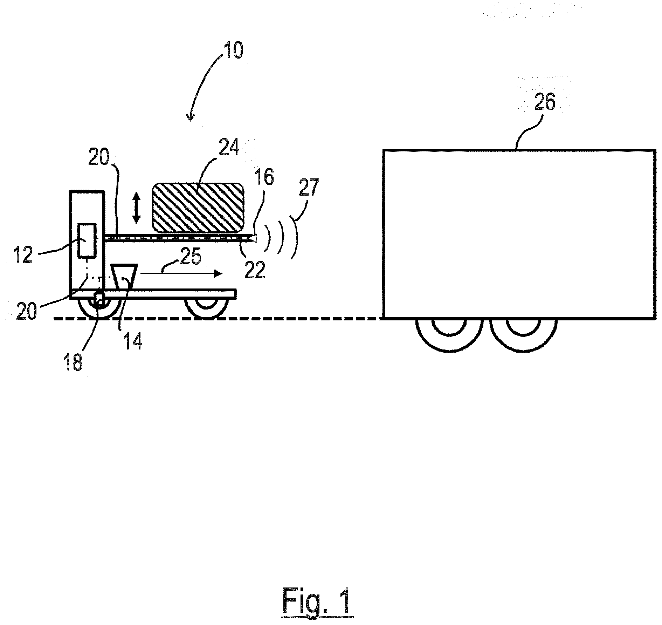

Fig. 1 zeigt ein fahrerloses Transportfahrzeug, genauer gesagt einen autonomen Gabelstapler 10. Der Gabelstapler 10 umfasst eine Steuereinheit 12, welche einen Antrieb des Gabelstaplers 10 steuert. Die Steuereinheit 12 ist zudem mit einem primären Umgebungssensor in Form eines Laserscanners 14 sowie mit einem sekundären Umgebungssensor gekoppelt, welcher zwei Ultraschallsensoren 16 umfasst. Die Steuereinheit 12 ist überdies mit einer Fahrsensorik 18 gekoppelt, welche an einem Rad des Gabelstaplers 10 befestigt ist und die Bewegungen des Rades erfasst. Die Sensoren 14, 16, 18 sind über Datenverbindungen 20 mit der Steuereinheit 12 gekoppelt.

Der Gabelstapler 10 umfasst eine Gabelzinke 22, auf welcher eine Last 24 transportiert werden kann. Die Ultraschallsensoren 16 sind an den beiden Enden der Gabelzinke 22 angeordnet.

Der Laserscanner 14 ist derart angeordnet, dass er bei angehobener Last 24 unter der Last 24 nach rückwärtig blicken kann. Dementsprechend sendet der Laserscanner 24 im Betrieb Laserpulse 25 nach rückwärtig aus, um die Umgebung zu erfassen. Über rückgestrahlte Laserpulse (nicht gezeigt) ermittelt der Laserscanner 24 die Lichtlaufzeit und daraus den Abstand von Objekten in seinem Messbereich.

In entsprechender Weise senden die Ultraschallsensoren 16 Ultraschallwellen 27 aus.

Fig. 1 zeigt überdies eine Wechselbrücke 26, welche auf einem Lkw-Anhänger angeordnet ist und an ein (nicht gezeigtes) Verladeterminal herangefahren ist, so dass der autonome Gabelstapler 10 in die Wechselbrücke 26 einfahren kann.

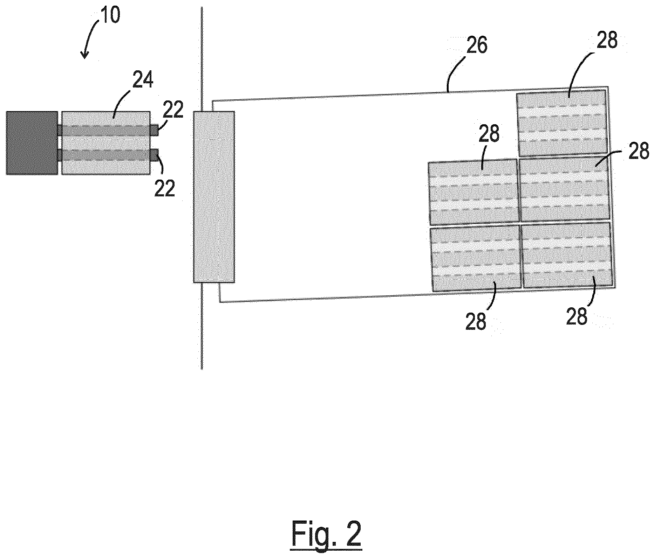

In Fig. 2 ist nun der Gabelstapler 10 und die Wechselbrücke 26 in einer schematischen Draufsicht gezeigt. Es ist zu erkennen, dass in der Wechselbrücke 26 bereits mehrere abgeladene Paletten vorhanden sind. Die von dem Gabelstapler 10 transportierte Last ist ebenfalls eine Palette, welche neben den bereits abgeladenen Paletten 28 positioniert werden soll.

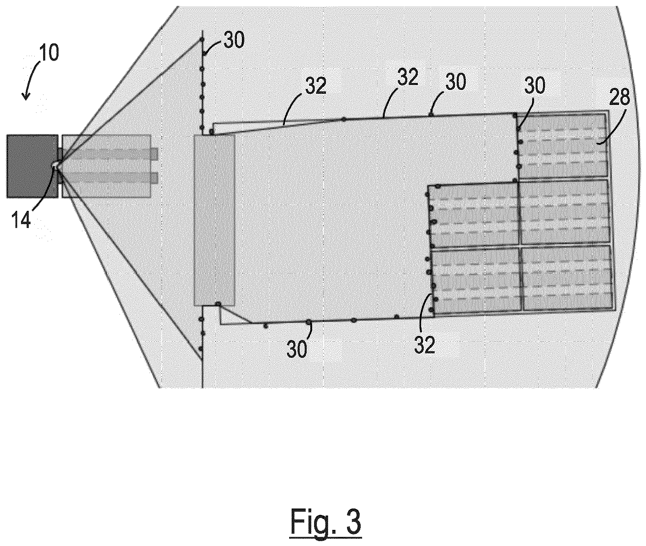

Fig. 3 zeigt nun, dass mittels des Laserscanners 14 zunächst ein Scan der Wechselbrücke 26 und der weiteren Umgebung erfolgt. Dabei erfasst der Laserscanner 14 eine Vielzahl von Messpunkten 30, welche eine Kontur 32 bilden. Durch den Scan mit dem primären Umgebungssensor, d.h. mit dem Laserscanner 14, erfolgt also eine Erfassung sowohl des Absetzorts 34, als auch des Fahrwegs des Gabelstaplers bis zum Absetzort 34 und auch der Umgebung des Absetzorts und des Fahrwegs, d.h. der Nachbarbereiche. Dementsprechend bildet also die Kontur 32 die erfassten Nachbarbereiche.

Über eine (nicht gezeigte) Funkschnittstelle kann die Steuereinheit 12 von einem übergeordneten Automatisierungssystem Daten über den Beladungszustand der Wechselbrücke 26 erhalten.

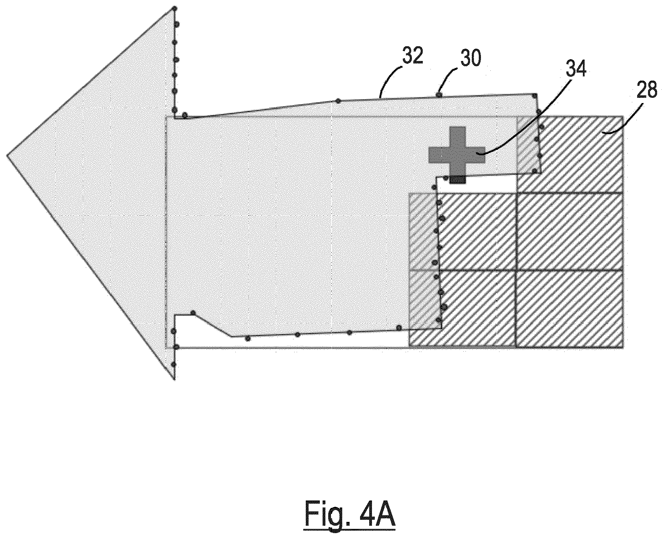

In Fig. 4A sind die schraffiert dargestellten Bereiche diejenigen Bereiche, die vom übergeordneten Automatisierungssystem als bereits von Paletten belegt dem Gabelstapler 10 mitgeteilt werden. Überdies wird dem Gabelstapler 10 ein Absetzort 34 mitgeteilt. Insbesondere können jeweils X-Y-Koordinaten der Kontur der bereits abgeladenen Paletten 28 von dem übergeordneten Automatisierungssystem dem Gabelstapler 10 mitgeteilt werden. Selbiges gilt für die Koordinaten des Absetzorts 34.

Es ist zu erkennen, dass die Messung bzw. Abtastung des Gabelstaplers 10 mit dessen Laserscanner 14 nicht vollständig mit dem von dem übergeordneten Automatisierungssystem erhaltenen Konturen übereinstimmt.

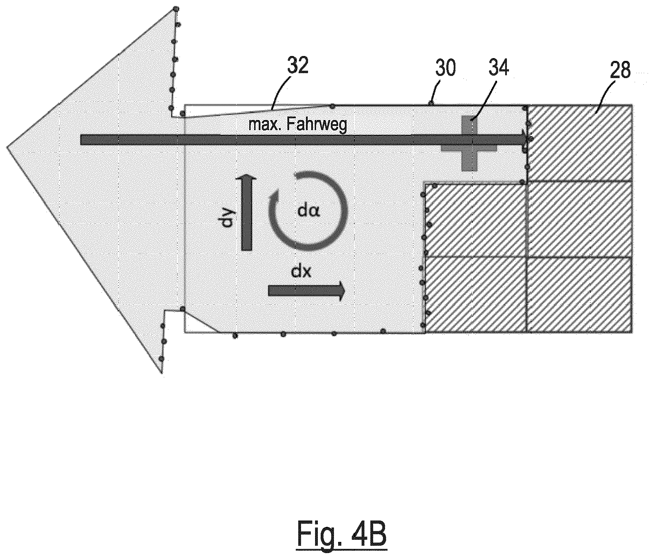

Wie in Fig. 4B gezeigt, erfolgt deshalb eine Anpassung der erhaltenen Kontur (d.h. der erwarteten Nachbarbereiche) und der gemessenen Kontur (d.h. der erfassten Nachbarbereiche). Die Anpassung erfolgt insbesondere durch Rotation (dα) und Verschiebung (dx, dy). Durch die Anpassung wird der Absetzort 34 und die erwarteten Nachbarbereiche an das Bezugssystem des Gabelstaplers 10 angepasst.

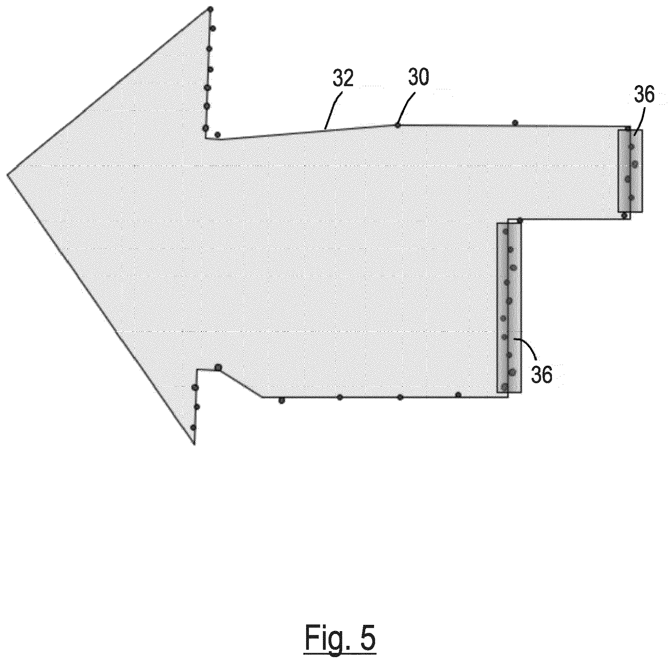

Nach der Anpassung (oder auch zuvor) erfolgt eine Überprüfung auf Hindernisse, also beispielsweise sich im Weg befindliche Personen. Hierzu wird zumindest bereichsweise um die erwarteten Nachbarbereiche ein Toleranzbereich 36 gelegt, wie dies in Fig. 5 gezeigt ist. In Fig. 5 existieren keine Messpunkte 30, welche auf ein Hindernis hindeuten würden.

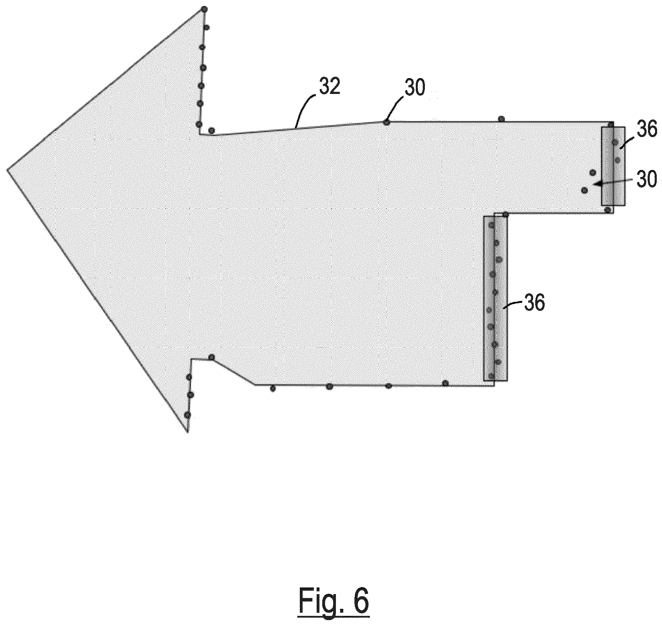

In Fig. 6 hingegen finden sich zwei Messpunkte 30 vor dem Toleranzbereich 36, so dass hier davon ausgegangen werden kann, dass eine Person vor der bereits abgeladenen Palette 28 steht. In diesem Fall darf der Gabelstapler 10 dann nicht den Absetzort 34 anfahren.

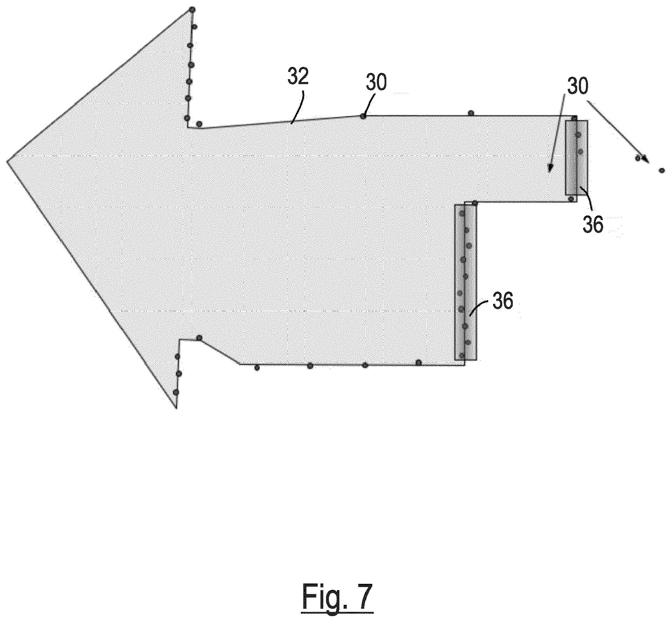

Fig. 7 zeigt eine andere Variante der Erkennung einer Person. In dem in Fig. 7 gezeigten Fall trägt die Person dunkle Hosen, so dass der Laserscanner 14 fast kein rückgestrahltes Signal von den Hosenbeinen erhält. Dies führt in der Praxis oft dazu, dass Messwerte weiter weg vom Laserscanner 14 generiert werden, was ebenfalls in Fig. 7 gezeigt ist. Da in diesem Bereich aber keine Werte liegen können, da sich dort die abgeladene Palette 28 befindet, wird dies ebenfalls als das Erkennen eines Hindernisses (d.h. einer Person) gewertet.

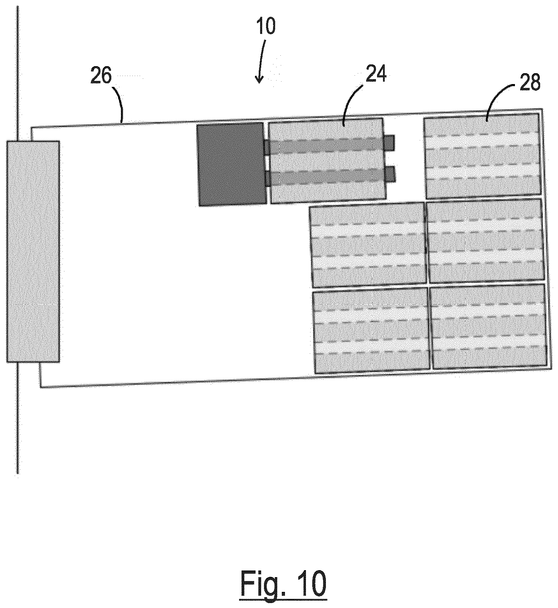

Die Ultraschallsensoren 16 bleiben solange aktiviert, bis der Gabelstapler 10 fast den Absetzort 34 erreicht hat und die bereits abgeladenen Paletten 28 so nahe an die Ultraschallsensoren 16 kommen, dass die Ultraschallsensoren 16 die abgeladenen Paletten 28 als Hindernis erkennen würden. Zu diesem Zeitpunkt werden die Ultraschallsensoren 16 abgeschaltet bzw. unberücksichtigt gelassen, wie in Fig. 10 gezeigt ist. Den restlichen Weg bis zum Absetzort 34 fährt der Gabelstapler 10 dann allein basierend auf der Fahrsensorik 18, da nun sichergestellt ist, dass sich zwischen der Last 24 und den bereits abgeladenen Paletten 28 kein Hindernis befindet.

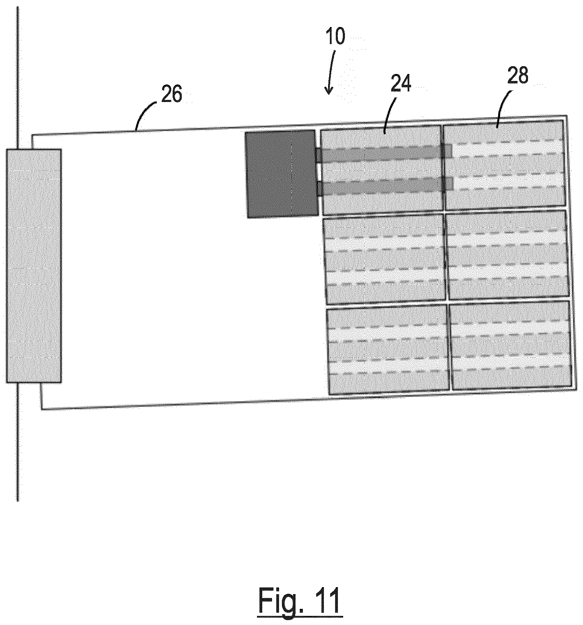

Erreicht der Gabelstapler 10 nun die in Fig. 11 dargestellte Position, wird die Gabelzinke 22 vollständig herabgelassen, um die Last 24 am Absetzort 34 abzuladen.

Auf diese Weise ist eine automatische Beladung einer Wechselbrücke 26 möglich, wobei eine Gefährdung von Personen ausgeschlossen werden kann.

### Bezugszeichenliste

- 10: autonomer Gabelstapler
- 12: Steuereinheit
- 14: Laserscanner
- 16: Ultraschallsensor
- 18: Fahrsensorik
- 20: Datenverbindung
- 22: Gabelzinke
- 24: Last
- 25: Laserpuls
- 26: Wechselbrücke
- 27: Ultraschallwellen
- 28: abgeladene Palette
- 30: Messpunkt
- 32: Kontur
- 34: Absetzort
- 36: Toleranzbereich

## Patentansprüche

1. Fahrerloses Transportfahrzeug (10) zum Transportieren und Absetzen einer Last (24), mit einem primären Umgebungssensor (14) und zumindest einem sekundären Umgebungssensor (16),
wobei das Transportfahrzeug (10) ausgebildet ist,
- zunächst mit dem primären Umgebungssensor (14) einen Absetzort (34) für die Last (24) sowie den Bereich zwischen dem Absetzort (34) und dem Transportfahrzeug (10) zu erfassen und auf Hindernisse zu überprüfen,
- wenn kein Hindernis erkannt wird, zu dem Absetzort (34) zu fahren,
- während der Fahrt zum Absetzort (34) mit dem sekundären Umgebungssensor (16) die Fahrstrecke und den Absetzort (34) auf Hindernisse zu überprüfen.

2. Transportfahrzeug (10) nach Anspruch 1,
wobei das Transportfahrzeug (10) ausgebildet ist, mit dem primären Umgebungssensor (14) zusätzlich zu dem Absetzort (34) auch Nachbarbereiche des Absetzorts (34) zu erfassen und die erfassten Nachbarbereiche mit erwarteten Nachbarbereichen zu vergleichen.

3. Transportfahrzeug (10) nach Anspruch 2,
wobei das Transportfahrzeug (10) ausgebildet ist, die erwarteten Nachbarbereiche von einem übergeordneten Automatisierungssystem zu empfangen.

4. Transportfahrzeug (10) nach einem der vorstehenden Ansprüche,
wobei das Transportfahrzeug (10) ausgebildet ist, bei der Prüfung auf Hindernisse mittels des primären Umgebungssensors (14) eine Plausibilitätsprüfung der von dem primären Umgebungssensor (14) erfassten Messdaten durchzuführen.

5. Transportfahrzeug (10) nach zumindest den Ansprüchen 2 und 4, wobei das Transportfahrzeug (10) ausgebildet ist, bei der Plausibilitätsprüfung einen Toleranzbereich um die erwarteten Nachbarbereiche zu legen, wobei Messpunkte (30) außerhalb des Toleranzbereichs welche vor oder hinter den erwarteten Nachbarbereichen liegen und/oder fehlende Messpunkte (30) als Hindernis gewertet werden.

6. Transportfahrzeug (10) nach einem der vorstehenden Ansprüche 2 bis 5, wobei das Transportfahrzeug (10) ausgebildet ist, die erfassten Nachbarbereiche und die erwarteten Nachbarbereiche, insbesondere durch Rotation und Verschiebung, aneinander anzupassen.

7. Transportfahrzeug (10) nach einem der vorstehenden Ansprüche, wobei das Transportfahrzeug (10) ausgebildet ist, die Länge des Fahrwegs bis zum Absetzort zu ermitteln und während der Fahrt zum Absetzort (34) den tatsächlich zurückgelegten Fahrweg mittels einer, insbesondere mit einem Rad oder einer Achse des Transportfahrzeug (10) gekoppelten, Fahrsensorik (18) zu überwachen.

8. Transportfahrzeug (10) nach einem der vorstehenden Ansprüche, wobei das Transportfahrzeug (10) ausgebildet ist, beim Anfahren des Absetzorts den primären Umgebungssensor (14) unberücksichtigt zu lassen.

9. Transportfahrzeug (10) zumindest nach Anspruch 2,
wobei das Transportfahrzeug (10) ausgebildet ist, beim Anfahren des Absetzorts auch den sekundären Umgebungssensor (16) unberücksichtigt zu lassen, wenn das Transportfahrzeug (10) den erfassten und/oder den erwarteten Nachbarbereichen näher als einen vorbestimmten Schwellenwert kommt.

10. Transportfahrzeug (10) zumindest nach Ansprüchen 7 und 9,
wobei das Transportfahrzeug (10) ausgebildet ist, nachdem der sekundäre Umgebungssensor (16) unberücksichtigt gelassen wurde, den restlichen Fahrweg durch die Fahrsensorik zu überwachen.

11. Transportfahrzeug (10) nach einem der vorstehenden Ansprüche,
wobei der primäre und/oder der sekundäre Umgebungssensor (14, 16) einen 2D- oder 3D-Sensor, einen Laserscanner, einen Mehrlagen-Laserscanner, einen Mehrstrahlscanner, eine 3D-Kamera, ein Radar und/oder einen Ultraschallsensor umfasst, wobei der primäre Umgebungssensor (14) bevorzugt als Laserscanner und der sekundäre Umgebungssensor (16) bevorzugt als Ultraschallsensor ausgebildet ist.

12. Transportfahrzeug (10) nach einem der vorstehenden Ansprüche,
wobei das Transportfahrzeug (10) ein autonomer Gabelstapler oder ein autonomes Flurförderzeug ist.

13. Verfahren zum Absetzen einer Last (24) an einem Absetzort mittels eines Transportfahrzeugs (10), bei welchem
- zunächst mit einem primären Umgebungssensor (14) ein Absetzort (34) für die Last (24) sowie der Bereich zwischen dem Absetzort (34) und dem Transportfahrzeug (10) erfasst und auf Hindernisse überprüft wird,
- wenn kein Hindernis erkannt wird, das Transportfahrzeug (10) zu dem Absetzort (34) fährt,
- während der Fahrt zum Absetzort (34) mit einem sekundären Umgebungssensor (16) die Fahrstrecke und der Absetzort (34) auf Hindernisse überprüft wird.

14. Verfahren nach Anspruch 13, wobei
sich der Absetzort (34) in einem Lkw oder einer Wechselbrücke (26) befindet und das Transportfahrzeug (10) vor dem Erfassen des Absetzorts (34) mit dem primären Umgebungssensor (14) an eine Position außerhalb des Lkws oder der Wechselbrücke (26) fährt, von welcher aus der Absetzort (34) mit dem primären Umgebungssensor (14) erfassbar ist.

15. Verfahren nach Anspruch 13 oder 14, wobei
zum Erfassen des Absetzorts (34) mittels des primären Umgebungssensors (14) die Last (24) angehoben wird, um eine Sicht des primären Umgebungssensors (14) unter der Last (24) hindurch auf den Absetzort (34) freizugeben.
